# EUROPEAN PATENT APPLICATION

(11) **EP 2 824 934 A1**
(43) Date of publication of application: **14.01.2015**
(21) Application number: 13750490.8
(22) Date of filing: 20.05.2013
(51) Int. Cl.: H04N 21/40, H04N 5/44

(54) **TOUCHABLE INTELLIGENT SET TOP BOX APPARATUS AND INTELLIGENT MULTIMEDIA PLAYING SYSTEM**

(71) Applicant: Gadmei Electronics Technology Co., Ltd., Qingyuan Guangdong 511542 (CN)
(72) Inventor: YAO, Yuanping, Qingyuan, Guangdong 511542 (CN); ZHANG, Zhihua, Qingyuan, Guangdong 511542 (CN); WANG, Yu, Qingyuan, Guangdong 511542 (CN)
(74) Representative: Cabinet Laurent & Charras
(86) International application number: PCT/CN2013/075886
(87) International publication number: WO 2014/186930

(57) **Abstract**

A smart touch set-top box device comprises a touch screen, a LCD, a microprocessor, a television signal processing unit, a speaker, a wireless communication unit and an Ethernet communication unit, wherein the touch screen is arranged on the front end of said LCD for detecting the touch location of a user and transmitting a touch sensing signal to said microprocessor, the microprocessor is used for converting said touch sensing signal to operational order, controlling said television signal processing unit to communicatively connect with external device by driving said wireless communication unit or Ethernet communication unit, thereby realizing the synchronously play of audio and video signal on multi-screens. A smart network multimedia playing system sends wireless signal by mobile terminal to control the operation of said set-top box, thereby realizing the synchronously play of audio and video data on the own device of the set-top box and external television.

## Description

### FIELD OF THE INVENTION

The present invention relates to the technical field of electronic and electrical appliances, more particularly to a smart touch set-top box device and a smart network multimedia playing system.

### BACKGROUND OF THE INVENTION

STB is short for the set-top box, which is a device for connecting televisions and external signal sources. A basic function of the digital set-top box is receiving the digital television signals which may come from the wired cable, satellite antenna, broadband network and terrestrial broadcasting, and enabling users to watch digital television shows on the present televisions.

Digital televisions are commonly used in the world now. Especially in recent years, as the Internet has been widely used around the country, the digital television network based on the Internet technology has developed very fast. On one hand, with the development of the Internet, IPTV (Interactive Personality TV), which combines multiple techniques such as Internet, multi-media, communication and so on to provide multiple interactive services including the digital television to home users by using broadband cable television network, emerges as the times require and competes with traditional cable digital television set-top boxes based on the broadcast television network. IPTV enables the television, personal computer and mobile device to serve as display terminals and access the broadband network by means of the set-top box or the computer, thereby providing services such as digital television, Time Shifting over Cable, interactive television, etc. On the other hand, with the rapid development of integrated circuit technique, the mobile communication terminals including mobile, laptop, tablet computer, POS (Point Of Sales) and so on may realize the interaction of audio and video between two or more parties, so they are applied widely. With the development of the broadband network, the communication industry will move to a real mobile information time.

In the prior art, the mobile communication terminal and set-top box are two customer terminal devices independently. This independent form makes users need to buy both devices to experience the functions of the mobile communication terminal and set-top box at the same time. On the one hand it increases costs, and on the other hand, two independent devices are inconvenient for users to operate. Furthermore, since the present set-top boxes are not configured with display screen, users cannot browse the received multimedia data directly via the set-top box, but have to transmit the received television signals to the television to play. Since the set-top box cannot interact with the external devices including the mobile communication terminals, the data transmission between the set-top box and television usually need to be controlled by the control button on set-top box or IR remote control.

### SUMMARY OF THE INVENTION

The present invention is to solve a technical problem, which is to provide a smart touch set-top box device sending a control signal by operating a touch screen, transmitting data between the set-top box device and external device, and outputting, by connecting to the Internet via a wireless signal, audio and video signals to a LCD on the set-top box and an external display device to play synchronously, and provide a smart network multimedia playing system controlling the operating state and data interaction of a set-top box and a television by a wireless signal of a mobile terminal.

In order to solve the above technical problem, an embodiment of the present invention provides a smart touch set-top box device comprising a LCD, a touch screen, a microprocessor, a television signal processing unit, a speaker, a wireless communication unit and an Ethernet communication unit;
said touch screen is arranged on the front end of said LCD for detecting and positioning the touch location of a user and transmitting the touch sensing signal to said microprocessor,
said microprocessor is used for converting said touch sensing signal to an operational order, it transmits said operational order to said television signal processing unit, drives said television signal processing unit to generate a video signal and an audio signal, transmits said video signal to said LCD and/or external display device to display, and transmits said audio signal to said speaker and/or external speaker device to play,
said television signal processing unit is used for connecting to the Internet and receiving channel information of television programs on the Internet,
said wireless communication unit is connected with said television signal processing unit and said microprocessor, respectively; said Ethernet communication unit is connected with said television signal processing unit and said microprocessor, respectively; and
said microprocessor is also used for controlling said television signal processing unit to communicatively connect with external device by driving said wireless communication unit or said Ethernet communication unit.

Specifically, said microprocessor comprises a functional control unit, a signal switching unit and a touch switching unit,
said functional control unit is used for sending an operational order according to the received control signal and controlling said signal switching unit and touch switching unit to perform functional switching action,
said signal switching unit is used for transmitting, according to the operational order of said functional control unit, the video signal of said television signal processing unit to said LCD and/or the external display device to display and the audio signal of said television signal processing unit to said speaker and/or said external speaker device to play,
said touch switching unit is used for converting, according to the operational order of said functional control unit, the touch sensing signal output by said touch screen to a control signal, and transmitting said control signal to said functional control unit.

The present invention also provides a smart network multimedia playing system comprising a set-top box, a mobile terminal and a television,
said set-top box is the smart touch set-top box device, said television comprises a displayer and a loud-speaker,
said mobile terminal is used for controlling said set-top box to switch the playing information by sending wireless signal to said set-top box,
said set-top box is used for transmitting, according to the wireless signal of said mobile terminal or the touch sensing signal of the touch screen on said set-top box, video signal to the LCD on said set-top box and said displayer to synchronously display and audio signal to the speaker on said set-top box and said loud-speaker to synchronously play,
said set-top box is also used for transmitting said video signal and audio signal to said mobile terminal by sending a wireless signal to said mobile terminal.

Implementing the embodiments of the present invention will have the advantages as following:
The smart touch set-top box device provided by the embodiments of the present invention combines a touch screen, a LCD, a microprocessor, a wireless communication unit and an Ethernet communication unit, controls the operation of each function module of the set-top box device by the touch sensing signal from the touch screen, performs the transmission of audio and video signal between the set-top box device and external devices by controlling the microprocessor to achieve the effect of data exchange and display in one screen, makes this set-top box device to be a multi-functional smart all-in-one machine by configuring other function modules reasonably, and enables the human-computer interaction more convenient by configuring a touch screen matched with the LCD. The smart network multimedia playing system provided by the embodiments of the present invention controls the operation of the set-top box device by sending wireless signal by mobile terminal and achieves the data transmission and display between the set-top box device comprising a screen and the external devices including the mobile terminal and television.

### BRIEF DESCRIPTION OF THE DRAWINGS

Figure 1 is a schematic diagram of an embodiment of a smart touch set-top box device of the present invention;
Figure 2 is a schematic diagram of the microprocessor of the present invention;
Figure 3 is a schematic diagram of the wireless communication unit of the present invention;
Figure 4 is a schematic diagram of the television signal processing unit of the present invention;
Figure 5 is a schematic diagram of another embodiment of a smart touch set-top box device of the present invention;
Figure 6 is a schematic diagram of an embodiment of a smart network multimedia playing system of the present invention.

### DETAILED DESCRIPTION OF ILLUSTRATED EMBODIMENTS

Various preferred embodiments of the invention will now be clearly and fully described with reference to the figures. Obviously, the intention is not to limit the invention to the particular embodiments described. Based on the embodiments of the invention, the intention is to cover all embodiments which are obtained by one skilled in the art without creative work falling within the scope of the invention.

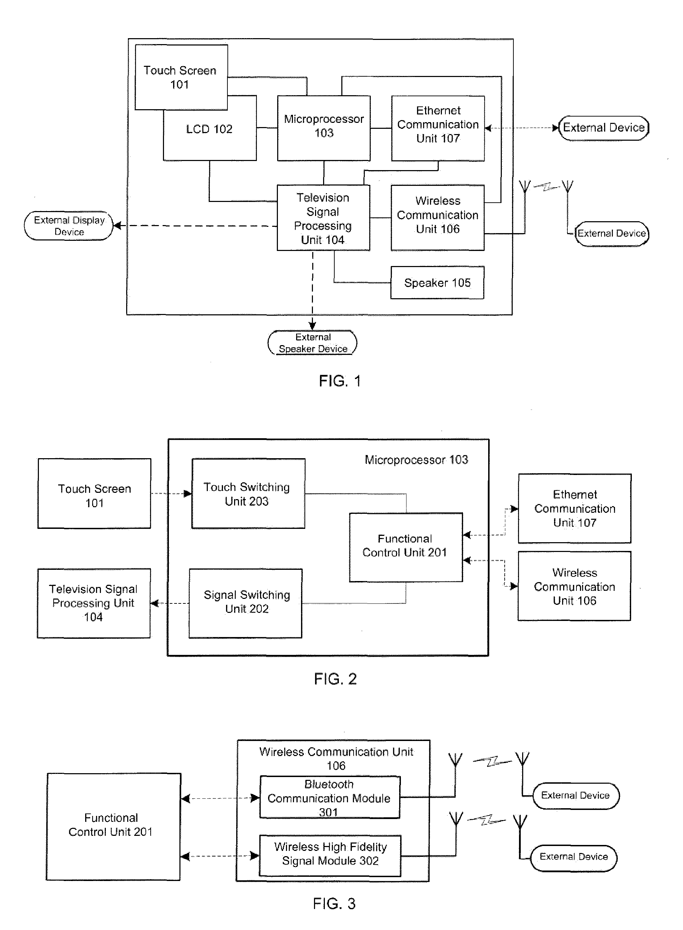

Referring to Fig. 1, it is a schematic diagram of an embodiment of a smart touch set-top box device of the present invention.

In this embodiment, the smart touch set-top box device comprises: a touch screen 101, a LCD 102, a microprocessor 103, a television signal processing unit 104, a speaker 105, a wireless communication unit 106 and an Ethernet communication unit 107.

The touch screen 101 is arranged on the front end of said LCD 102 for detecting and positioning the touch location of a user and transmitting touch sensing signal to said microprocessor 103. In this embodiment, the touch screen 101 sends the operation signal of the user by touch sensing signal, taking the place of traditional remote controls or the control buttons on set-top box.

The microprocessor 103 is used for converting said touch sensing signal to operational orders, it transmits said operational orders to said television signal processing unit 104, drives said television signal processing unit 104 to generate video signal and audio signal, transmits said video signal to said LCD 102 and/or an external display device to display, and transmits said audio signal to said speaker 105 and/or an external speaker device to play. In practicing, as the central processing unit of the set-top box device of the present invention, the microprocessor 103 controls the operation of each of its internal function modules. The television signal processing unit 104 processes the received television signal to obtain video and audio signal, and under the control of the microprocessor 103, it may display the video signal separately by means of the own LCD 102 of set-top box device, or separately output the video signal to external display device to play, or simultaneously output the video signal to the LCD 102 and external display device to play, realizing the synchronously display on multi-screens. Accordingly, under the control of the microprocessor 103, the television signal processing unit 104 may play the audio signal separately by means of the own speaker 105 of set-top box device, or separately output the audio signal to external speaker device to play, or simultaneously output the audio signal to the speaker 105 and external speaker device to play.

The television signal processing unit 104 is used for connecting Internet and receiving channel information of television programs on the Internet. Specifically, the television signal processing unit 104 receives digital television programs by the network interface, searches for multimedia signal on the Internet, separates video signal and audio signal by means of the function modules in the television signal processing unit 104, and transmits the obtained video signal and audio signal to the corresponding playback device to play.

The wireless communication unit 106 is connected with said television signal processing unit 104 and said microprocessor 103, respectively; said Ethernet communication unit 107 is connected with said television signal processing unit 104 and said microprocessor 103, respectively.

The microprocessor 103 is also used for controlling said television signal processing unit 104 to communicatively connect with an external device by driving said wireless communication unit 106 or said Ethernet communication unit 107.

In this embodiment, the wireless communication unit 106 may realize the data interaction between the microprocessor 103 and/or the television signal processing unit 104 and external devices by using the wireless signal present in Wireless Local Area Networks (WLAN). Specifically, the wireless communication unit 106 transmits the control signal of said external device to the microprocessor 103 by wireless signal, and then the microprocessor 103 operates and controls the operating state of the television signal processing unit 104 according to the control signal, and thereby controls the video output on the LCD 102 on the set-top box and the audio output on the speaker 105. Accordingly, the microprocessor 103 receives the touch sensing signal from the touch screen 101, sends control signal to the wireless communication unit 106, controls the wireless communication unit 106 to communicate with external device, and outputs the corresponding audio and video signal to the LCD 102 and/or other external devices to play. Therefore, in this embodiment, the wireless communication unit 106 realizes the data interaction between the set-top box and external devices, serving as both signal receiving end and signal sending end.

In this embodiment, using current mature wired technology for communication, the Ethernet communication unit 107 accesses digital television signal via the network interface by using multiple transmission mediums such as thick coaxial, thin coaxial, unshielded twisted pair, shielded twisted pair, fibre-optical, etc. Specifically, when using twisted pair to transmit data, the Ethernet communication unit 107 is configured with RJ-45 network interface conforming to IEEE (The Institute of Electrical and Electronics Engineers) standard 802.3 and with a transmission rate of 10Mbps (million bits per second) or 100Mbps or 1000Mbps. A main function of the Ethernet communication unit 107 is accessing wired PSTN (i.e. Public Switch Telephone Network). It transmits audio and video signal on PSTN to the television signal processing unit 104 after demodulating them and performing analog-to-digital conversion, which also realizes the access of the multimedia information on the Internet or the output of audio and video signal to the Internet, communicating with other external devices by PSTN or Internet.

Furthermore, in this embodiment deemed as a preferred embodiment, the microprocessor 103 comprises: a functional control unit 201, a signal switching unit 202 and a touch switching unit 203.

Referring to Fig. 2, it is a schematic diagram of the microprocessor of the present invention. In this embodiment, the functional control unit 201 is connected with the signal switching unit 202 and the touch switching unit 203 in the microprocessor 103, respectively, the signal switching unit 202 is connected with the television signal processing unit 104, and the touch switching unit 203 is connected with the touch screen 101.

Wherein, said functional control unit 201 is used for sending operational order according to the received control signal and controlling said signal switching unit 202 and touch switching unit 203 to perform functional switching action.

The signal switching unit 202 is used for transmitting, according to the operational order of said functional control unit 201, the video signal of said television signal processing unit 104 to said LCD 102 and/or the external display device to display and the audio signal of said television signal processing unit 104 to said speaker 105 and/or the external speaker device to play.

The touch switching unit 203 is used for converting, according to the operational order of said functional control unit 201, the touch sensing signal output by said touch screen 101 to control signal, and transmitting said control signal to said functional control unit 201.

Furthermore, in the smart touch set-top box device of this embodiment, said functional control unit 201 is installed with an interactive operating system, and it is used for transmitting data with Internet by means of said wireless communication unit 106 or said Ethernet communication unit 107, and transmitting the network television signal received from the Internet to said television signal processing unit 104. Specifically, said interactive operating systems comprises, without limitation, Android (Android system), IOS (Apple Inc. operating system), Windows 7 and Window XP (Microsoft operating system).

Specifically, as a preferred embodiment, wherein said wireless communication unit 106 comprises a Bluetooth communication module 301 and a wireless high fidelity signal module 302.

Referring to Fig. 3, it is a schematic diagram of the wireless communication unit of the present invention. As a preferred embodiment, wherein said wireless communication unit 106 comprises a Bluetooth communication module 301 and a wireless high fidelity signal module 302.

Wherein said functional control unit 201 is also used for performing data connection with an external device by said Bluetooth communication module 301 or wireless high fidelity signal module 302, receiving the control signal of said external device by a wireless high fidelity signal, and sending an operational order to said signal switching unit 202 according to the control signal of said external device. Specifically, using the open wireless communication standard, the Bluetooth communication module 301 in the wireless communication unit 106 may be connected by wireless to external devices such as tablet computer, notebook computer, mobile phone, camera phone, printer, digital camera, headset, keyboard, computer mouse and so on across small distances (commonly in ten meters). Wireless Fidelity (Wi-Fi, for short) is similar with the Bluetooth technology, both of which belong to short-range wireless technology for office and family. Wi-Fi technology uses the frequency band around 2.4GHz (Gigahertz), about which no license required so far. Two available standards for it are IEEE 802.11a and IEEE 802.11b, respectively. Comparing with Bluetooth signal, Wi-Fi signal has a transmission distance of about 100 meters, which is of a longer transmission distance and a wider range of application.

More specifically, the television signal processing unit 104 of the embodiment of the present invention comprises a demux module 401, a video decoder 402 and an audio decoder 403.

Referring to Fig. 3, it is a schematic diagram of the television signal processing unit of the present invention.

Said demux module 401 is used for demultiplexing the received transport stream (TS, for short) or program stream (PS, for short) and obtaining a packetized video elementary stream (PES, for short) and a packetized audio elementary stream according to the operational order of said functional control unit 201. Specifically, TS and PS are two types of packaging manners of elementary stream under the standard of Moving Pictures Experts Group (MPEG, for short). Data compression is performed on audio, video signal and digital signal by MPEG-2 encoder and elementary stream (i.e. ES) is formed. Then ES is packetized to form a code stream with packet header, i.e. PES elementary stream.

The video decoder 402 is used for transmitting video signal to said LCD 102 and/or an external display device to display after decoding said packetized video elementary stream.

The audio decoder 403 is used for transmitting audio signal to said speaker 105 and/or an external speaker device to play after decoding said packetized audio elementary stream.

It is necessary to explain that, the external device in this embodiment comprises, without limitation, portable device such as tablet computer, notebook computer, mobile phone, camera phone, printer, digital camera, headset, keyboard, computer mouse, etc.

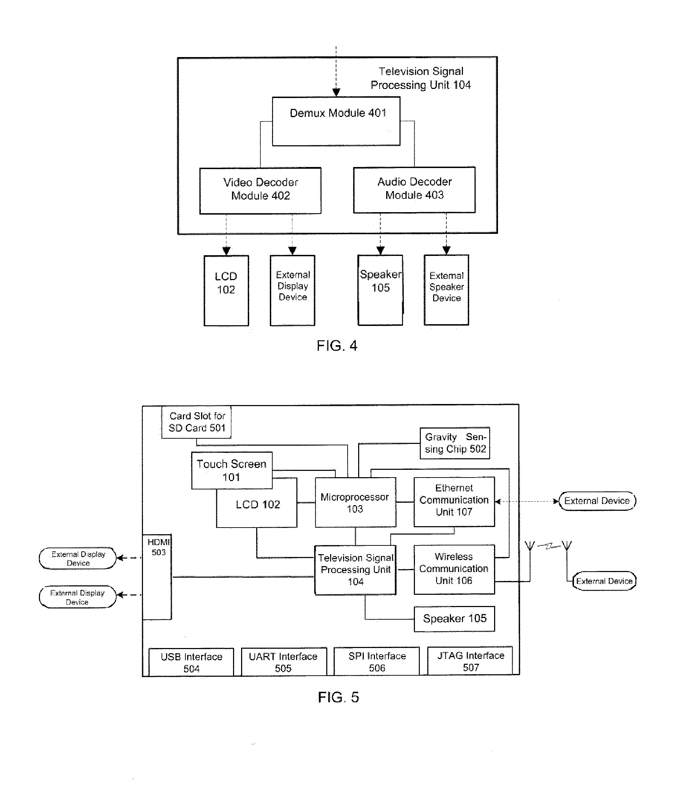

Referring to Fig. 5, it is a schematic diagram of another embodiment of a smart touch set-top box device of the present invention.

Based on the embodiment of Figs. 1-4, said device is further configured with a card slot for Secure Digital Card 501 on the edge of said device, connecting with the microprocessor 103 for reading the data from the Secure Digital Card (i.e. SD card) and transmitting the data from said Secure Digital Card to said microprocessor 103. In practicing, the user needs to insert the SD card storing multimedia information (including audio and video signal and other data information) into the card slot for Secure Digital Card 501. When the microprocessor 103 detects the data of SD card, it accesses the data and outputs the signal for reminding the user to switch and play.

Optionally, said device is further configured with a gravity sensing chip 502 for controlling the direction of video output images on said LCD 102 according to the direction of gravity. Specifically, the gravity sensing chip 502 is connected with the microprocessor 103 for transmitting the signal it sensed about gravity to the microprocessor 103, and then the microprocessor 103 controls the direction of video output images on said LCD 102 according to this sensing signal.

Specifically in this embodiment, said device is further configured with a plurality of data input and output interfaces. Specifically, the data input and output interfaces includes High Definition Multimedia Interface 503, Universal Serial Bus Interface 504, Universal Asynchronous Receiver/Transmitter Interface 505, Serial Peripheral Interface 506 and Joint Test Action Group Interface 507. High Definition Multimedia Interface (HDMI) is the interface technology for digital video/audio with the maximum data transmission rate of 5Gbps (Gigabits per second), and is a dedicated digital interface being suitable for image transmission. It may transmit audio and video signal simultaneously, without the need of digital-to-analogue or analog-to-digital conversion before transmitting the signal. In this embodiment, the microprocessor 103 may control the television signal processing unit 104 to transmit, by means of HDMI 503, video signal and audio signal to external device to play.

Universal Serial Bus (USB) is a serial bus standard for connecting to external device, and Universal Serial Bus Interface is USB interface. The USB interface has advantages such as rapid transmission rate (12Mbps for USB1.1, 480Mbps for USB2.0, 5 Gbps for USB3.0), convenient to use, supporting hot plug, flexible to connect, independent power supply, etc. In this embodiment, using the USB interface 504 on said device, it may be connected to almost all external devices such as mouse, keyboard, printer, scanner, camera, flash drive, mobile terminal, digital camera, mobile hard disk, external optical disc drive/floppy drive, etc.

Universal Asynchronous Receiver/Transmitter (UART) is a universal serial data bus for asynchronous communication, which may realize full-duplex transmission and receiving. In this embodiment, the UART interface 505 is used for communicating with external computers and testing function modules of the set-top box device including debugging monitor and other components.

SPI is short for Serial Peripheral interface. In this embodiment, SPI interface 506 may enable the microprocessor 103 to communicate with various peripheral devices in serial mode so as to exchange information.

JTAG (Joint Test Action Group) is an international standard testing protocol mainly used for internal testing within the chip and it is called JTAG for short. The fundamental principle of JTAG is defining a TAP (Test Access Port) inside a component and testing the internal node by means of specialized JTAG testing tool. In this embodiment, JTAG interface 507 is often used for realizing ISP (In-System Programmer), programming components such as FLASH (flash memory), etc.

Further in this embodiment, said device is further configured with a camera 508 with adjustable resolution for collecting external real-time image signal. Specifically, under the control of the microprocessor 103, the camera 508 transmits the collected real time dynamic or static image signal to the LCD 102 and/or external display device to display.

The smart touch set-top box device of the embodiment of the present invention greatly improves the function of the set-top box. It controls the operation of each function module of the set-top box device by the touch sensing signal from the touch screen. Alternatively, controlled by external devices via the wireless communication unit, it realizes the transmission of audio and video signal between the set-top box device and the external devices, achieves the effect of data exchange and display in one screen, and makes this set-top box to be a multi-functional smart all-in-one machine by configuring other function modules reasonably, which enables the human-computer interaction more convenient.

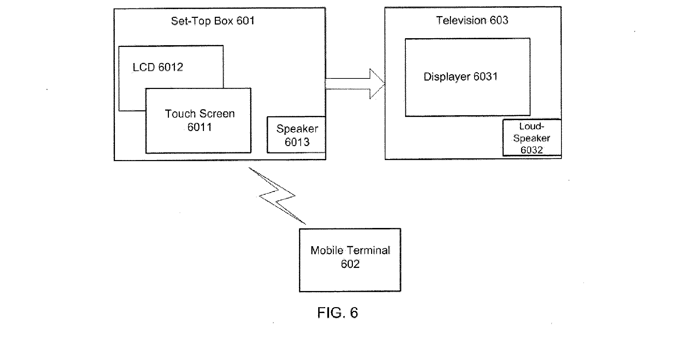

Referring to Fig. 6, it is a schematic diagram of an embodiment of a smart network multimedia playing system of the present invention.

In this embodiment, said smart network multimedia playing system comprises a set-top box 601, a mobile terminal602 and a television 603.

The set-top box is any kind of smart touch set-top box device of the embodiment of the present invention, and said television comprises a displayer 603 land a loud-speaker 6032.

The mobile terminal 602 is used for controlling said set-top box 601 to switch the playing information by sending wireless signal to said set-top box 601. In practicing, the user manipulates the mobile terminal directly and sends a channel switching signal by the mobile terminal 602, and then the set-top box 601 receives the wireless signal via the wireless communication unit, and after that, the microprocessor in the set-top box 601 converts it to a operational order whereby it controls the operating state of the set-top box 601.

The set-top box 601 is used for transmitting, according to the wireless signal of said mobile terminal 602 or the touch sensing signal of the touch screen 6011 on said set-top box 601, video signal to the LCD 6012 on said set-top box 601 and said displayer 6031 to synchronously display and audio signal to the speaker 6013 on said set-top box 601 and said loud-speaker 6032 to synchronously play.

The set-top box 601 is also used for transmitting said video signal and audio signal to the mobile terminal 602 by sending wireless signal to said mobile terminal 602. Specifically, the set-top box 601 may transmit, by Bluetooth signal or Wi-Fi signal of the wireless communication unit, the video signal and audio signal received from the Internet to the mobile terminal 602 to share, thereby realizing the data interaction between the set-top box 601 and the external device mobile terminal 602.

The smart multimedia playing system of the embodiment of the present invention controls the operation of the set-top box device by sending wireless signal via the mobile terminal, synchronously displays the video signal on multi-screens and synchronously plays the audio signal on multi-devices, thereby realizing the data transmission and display between the set-top box device with the screen and the external devices including the mobile terminal and the television, and improving the flexibility of the playing system. And since the mobile terminal has been popularized, this playing system may further save the cost of traditional remote control and be more convenient to control.

All the above are the preferred embodiments of the present invention. It is to be understood that, for one skilled in the art, the invention is intended to cover various modifications and equivalent arrangements included within the principle of the invention.

## Claims

1. A smart touch set-top box device, **characterized by** comprising:
a touch screen;
a LCD;
a microprocessor;
a television signal processing unit;
a speaker;
a wireless communication unit; and
an Ethernet communication unit,
wherein said touch screen is arranged on the front end of said LCD for detecting and positioning the touch location of a user and transmitting a touch sensing signal to said microprocessor;
said microprocessor is used for converting said touch sensing signal to an operational order, it transmits said operational order to said television signal processing unit, drives said television signal processing unit to generate a video signal and an audio signal, transmits said video signal to said LCD and/or external display device to display, and transmits said audio signal to said speaker and/or external speaker device to play;
said television signal processing unit is used for connecting to Internet and receiving channel information of television programs on the Internet;
said wireless communication unit is connected with said television signal processing unit and said microprocessor, respectively; wherein said Ethernet communication unit is connected with said television signal processing unit and said microprocessor, respectively; and
said microprocessor is also used for controlling said television signal processing unit to communicatively connect with external device by driving said wireless communication unit or said Ethernet communication unit.

2. The smart touch set-top box device according to claim 1, **characterized in that** said microprocessor comprises a functional control unit, a signal switching unit and a touch switching unit;
wherein said functional control unit is used for sending an operational order according to the received control signal and controlling said signal switching unit and touch switching unit to perform a functional switching action;
said signal switching unit is used for transmitting, according to the operational order of said functional control unit, the video signal of said television signal processing unit to said LCD and/or the external display device to display and the audio signal of said television signal processing unit to said speaker and/or said external speaker device to play;
said touch switching unit is used for converting, according to the operational order of said functional control unit, the touch sensing signal output by said touch screen to a control signal, and transmitting said control signal to said functional control unit.

3. The smart touch set-top box device according to claim 2, **characterized in that** said functional control unit is installed with an interactive operating system, and it is used for transmitting data with the Internet by means of said wireless communication unit or said Ethernet communication unit and transmitting the network television signal received from the Internet to said television signal processing unit.

4. The smart touch set-top box device according to claim 3, **characterized in that** said wireless communication unit comprises a Bluetooth communication module and a wireless high fidelity signal module;
wherein said functional control unit is also used for performing data connection with external device by said Bluetooth communication module or wireless high fidelity signal module, receiving the control signal of said external device by wireless high fidelity signal, and sending an operational order to said signal switching unit according to the control signal of said external device.

5. The smart touch set-top box device according to claim 4, **characterized in that** said television signal processing unit comprises a demux module, a video decoder and an audio decoder;
wherein said demux module is used for demultiplexing the received transport stream or program stream and obtaining a packetized video elementary stream and a packetized audio elementary stream according to the operational order of said functional control unit;
said video decoder is used for transmitting the video signal to said LCD and/or external display device to display after decoding said packetized video elementary stream;
said audio decoder is used for transmitting the audio signal to said speaker and/or external speaker device to play after decoding said packetized audio elementary stream.

6. The smart touch set-top box device according to anyone of claims 1-5, **characterized in that** said device is further configured with a card slot for Secure Digital Card for reading data from the Secure Digital Card and transmitting the data from said Secure Digital Card to said microprocessor.

7. The smart touch set-top box device according to claim 6, **characterized in that** said device is further configured with a gravity sensing chip for controlling the direction of video output images on said LCD according to the direction of gravity.

8. The smart touch set-top box device according to claim 7, **characterized in that** said device is further configured with a plurality of data input and output interfaces including High Definition Multimedia Interface, Universal Serial Bus Interface, Universal Asynchronous Receiver/Transmitter Interface, Serial Peripheral Interface and Joint Test Action Group Interface.

9. The smart touch set-top box device according to claim 8, **characterized in that** said device is further configured with a camera with adjustable resolution for collecting external real-time image signals.

10. A smart multimedia playing system, **characterized by** comprising:
a set-top box;
a mobile terminal; and
a television,
wherein said set-top box is any smart touch set-top box device of claims 1-9, said television comprises a displayer and a loud-speaker;
said mobile terminal is used for controlling said set-top box to switch playing information by sending a wireless signal to said set-top box;
said set-top box is used for transmitting, according to the wireless signal of said mobile terminal or the touch sensing signal of the touch screen on said set-top box, a video signal to the LCD on said set-top box and said displayer to synchronously display and an audio signal to the speaker on said set-top box and said loud-speaker to synchronously play;
said set-top box is also used for transmitting said video signal and audio signal to said mobile terminal by sending a wireless signal to said mobile terminal.
